# EUROPEAN PATENT APPLICATION

(11) **EP 4 379 643 A1**
(43) Date of publication of application: **05.06.2024**
(21) Application number: 22855711.2
(22) Date of filing: 22.03.2022
(51) Int. Cl.: G06Q 50/12, G06F 3/01, G06F 3/16

(54) **INFORMATION PROCESSING DEVICE, INFORMATION PROCESSING METHOD, AND PROGRAM**

(30) Priority: 13.08.2021 JP 2021131932
(71) Applicant: Sony Group Corporation, Tokyo 108-0075 (JP)
(72) Inventor: INOUE, Junki, Tokyo 108-0075 (JP); MURAKAMI, Tadayoshi, Tokyo 108-0075 (JP); SHIGA, Daizo, Tokyo 108-0075 (JP); SHIMIZU, Yuki, Tokyo 108-0075 (JP)
(74) Representative: D Young & Co LLP
(86) International application number: PCT/JP2022/012981
(87) International publication number: WO 2023/017645

(57) **Abstract**

An information processing apparatus (IP) includes a processor (PR). The processor (PR) records, in cooking data, a voice comment made by a recording user during cooking, and the voice comment is associated with sensor data measured at a time of making the voice comment.

## Description

### Field

The present invention relates to an information processing apparatus, an information processing method, and a program.

### Background

Techniques for sensing, recording, and reproducing cooking have been proposed. For example, Patent Literature 1 proposes a system that records information regarding cooking (ingredient, usage amount, cooking timing, cooking time, motion trajectory of cooking tool, heating power adjustment timing, and heating power duration) by using various sensors (camera, electronic balance, pot temperature sensor, stove switch angle sensor, infrared sensor, and piezoelectric sensor). In addition, a technique of generating and reproducing robot motions from these pieces of information has also been proposed.

### Citation List

### Patent Literature

Patent Literature 1: JP 2005-504259 A

### Summary

### Technical Problem

However, these techniques are mainly based on the assumption that a reproducer is a robot. Therefore, while it is possible to reproduce cooking by a robot in a controlled cooking environment having the same measuring instruments, it is difficult for people to reproduce cooking at restaurants and homes in various places.

Therefore, the present disclosure proposes an information processing apparatus, an information processing method, and a program capable of intuitively reproducing recorded cooking.

### Solution to Problem

According to the present disclosure, an information processing apparatus is provided that comprises a processor that records, in cooking data, a voice comment made by a recording user during cooking, the voice comment being associated with sensor data measured at a time of making the voice comment. According to the present disclosure, an information processing method in which an information process of the information processing apparatus is executed by a computer, and a program causing a computer to perform the information process of the information processing apparatus are provided.

### Brief Description of Drawings

FIG. 1 is a diagram illustrating an outline of a cooking data record reproduction system.
FIG. 2 is a functional block diagram of the cooking data record reproduction system.
FIG. 3 is a diagram illustrating a process flow in a recording mode.
FIG. 4 is a diagram illustrating an example of subjective information included in a voice comment by a recording user.
FIG. 5 is a diagram illustrating implicit knowledge of the recording user.
FIG. 6 is an explanatory diagram illustrating cooking step recognition.
FIG. 7 is a diagram illustrating an example of voice comment regarding start/end of the cooking step during recording.
FIG. 8 is a diagram illustrating a hardware configuration example of an information processing apparatus.

### Description of Embodiments

Hereinafter, embodiments of the present disclosure will be described with reference to the drawings. In each of the following embodiments, same parts are given the same reference signs to omit redundant description.

Note that the description will be given in the following order.
[1. Configuration of cooking data record reproduction system]
[2. Process flow]
   [2-1. Recording mode]
   [2-2. Reproduction mode]
[3. Example of subjective information included in voice comment by recording user]
[4. Learning implicit knowledge]
[5. Cooking step recognition]
[6. Hardware configuration example]
[7. Effects]

### [1. Configuration of cooking data record reproduction system]

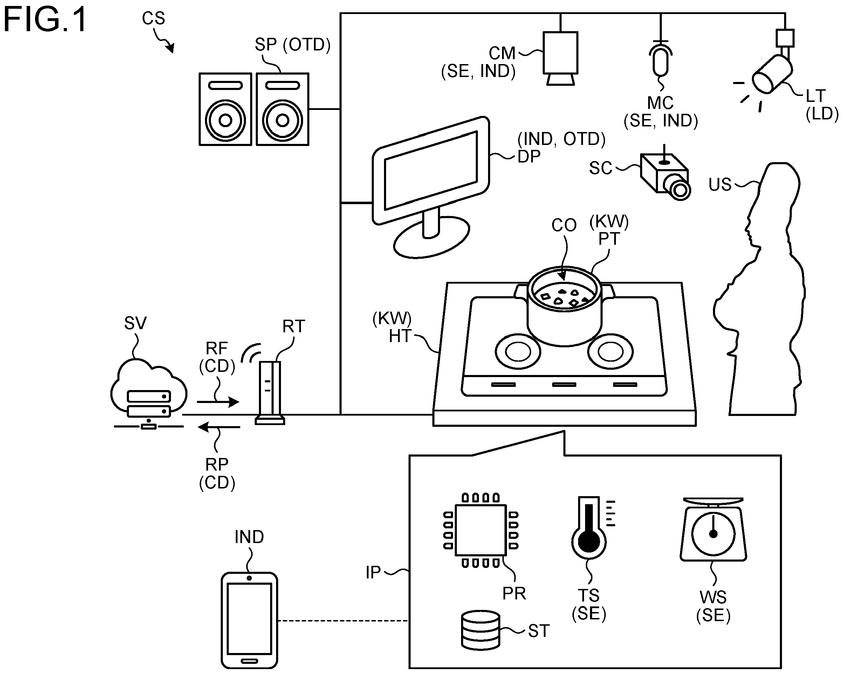

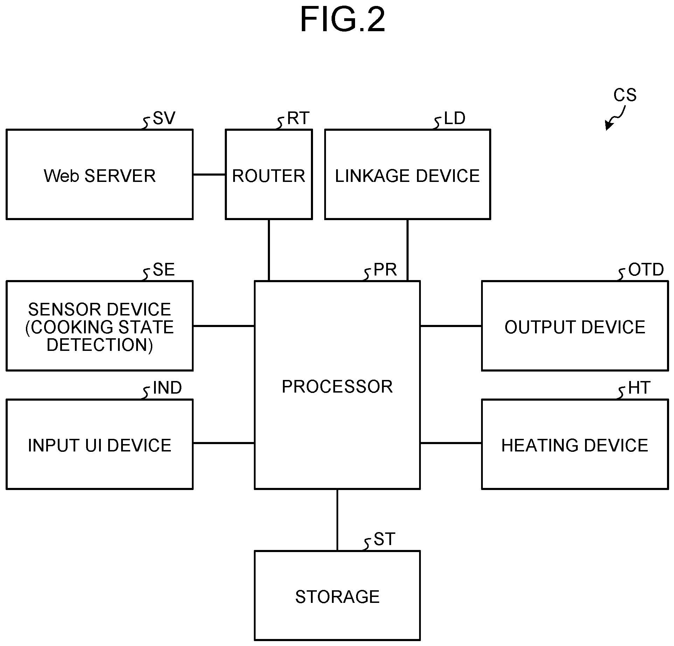

FIG. 1 is a diagram illustrating an outline of a cooking data record reproduction system CS. FIG. 2 is a functional block diagram of the cooking data record reproduction system CS.

The cooking data record reproduction system CS is a type of smart kitchen that supports cooking by cooperation between a cooking device with a built-in sensor and an information terminal. For example, the cooking data record reproduction system CS supports heating cooking using a heating cooker KW. In an example in FIG. 1, an induction heating (IH) heater HT and a pot PT are used as the heating cookers KW.

The cooking data record reproduction system CS generates cooking data CD for each dish using sensor data acquired from a sensor device SE. The cooking data CD is data indicating a profile of cooking performed by a cook US from a start to end of cooking. The cooking data CD includes, for example, time-series information (TTW information) regarding heating temperature, heating time, and weight of a cooking object CO. Information on heating power of the heating cooker KW is also included in the cooking data CD in association with the heating temperature. The cooking data CD can also include a video (cooking video) capturing a cooking process with a camera sensor CM.

A web server SV stores a large number of recorded cooking data CD. A cook at the time of recording may be the cook US or another cook. The cooking data record reproduction system CS acquires the recorded cooking data CD from the web server SV as reference data RF. The cook US performs cooking with reference to the reference data RF. Accordingly, a recorded dish can be reproduced.

Hereinafter, the cook US who uses the cooking data record reproduction system CS for the purpose of recording own cooking is referred to as a recording user. Furthermore, the cook US who uses the cooking data record reproduction system CS for the purpose of reproducing cooking by the recording user is referred to as a reproducing user.

The cooking data record reproduction system CS generates reproduction data RP based on a cooking profile of a dish being cooked. The cooking profile denotes time-series information representing an operation history of the cooking object CO in the cooking process and a state change of the cooking object CO. The reproduction data RP is the cooking data CD generated using the sensor data obtained at the time of reproduction. The cooking data record reproduction system CS monitors cooking by the reproducing user and continues to present information regarding a heating temperature, a heating timing, and the like to the reproducing user based on the reference data RF. As a result, an appropriate cooking operation according to the cooking situation is urged to the reproducing user.

The cooking data record reproduction system CS includes, for example, the IH heater HT, the pot PT, a display DP, a speaker SP, a line-of-sight sensor SC, the camera sensor CM, a microphone MC, lighting LT, the web server SV, a network router RT, an input UI device IND, and an information processing apparatus IP.

The camera sensor CM captures an image of the cooking object CO in the pot PT. The line-of-sight sensor SC detects the line of sight of the cook US. The microphone MC detects sound during cooking. The sound detected includes sound generated by cooking and voice of the cook US. The microphone MC is not limited to a stationary microphone, and may be a microphone built in a portable device such as earphones or headphones. The microphone MC may include all devices capable of sound input.

The display DP presents, in an image or voice, various types of information (support information) for supporting cooking. The input user interface (UI) device IND supplies user input information input by the cook US to the information processing apparatus IP.

The input UI device IND includes all user interfaces with the cook US corresponding to the input device. As the input UI device IND, for example, an information terminal such as a smartphone and a touch panel incorporated in the display DP is used. Furthermore, voice input by the microphone MC, gesture input by the camera sensor CM, and the like can also be included in the input information using the input UI device IND. Therefore, the microphone MC and the camera sensor CM function as the input UI device IND.

An output device OTD includes all output UI devices that present information to the cook US, such as the display DP and the speaker SP. As the display DP, for example, a wearable display such as augmented reality (AR) glasses can be used in addition to a stationary display such as a liquid crystal monitor and a projector. The output device OTD may also include information presentation apparatuses other than audio and visual devices, such as haptics devices.

The information processing apparatus IP integrally controls the entire cooking data record reproduction system CS based on various types of information detected by the cooking data record reproduction system CS. The information processing apparatus IP includes, for example, a processor PR, a temperature sensor TS, a weight sensor WS, and a storage ST. All the components of the information processing apparatus IP may be incorporated in the IH heater HT, or a part or all of the information processing apparatus IP may be mounted on an external device that communicates with the IH heater HT.

The temperature sensor TS measures a temperature of the pot PT or the cooking object CO in the pot PT. The weight sensor WS measures weight of the cooking object CO in the pot PT. For example, as the temperature sensor TS, a high responsive radiation thermometer capable of measuring in a non-contact manner is used. As the weight sensor WS, a load cell or the like is used. In the example in FIG. 1, the temperature sensor TS is built in the IH heater HT that is a heating control unit. However, the temperature sensor TS may be built in the pot PT that is a heating medium.

The temperature sensor TS and the weight sensor WS configure the sensor device SE that detects various types of information in the cooking data record reproduction system CS, together with the camera sensor CM, the line-of-sight sensor SC, and the microphone MC. The state of the cooking object CO is detected based on the sensor data acquired by the sensor device SE. In addition to the above-described sensors, the sensor device SE may include other sensors capable of detecting the state of the cooking object CO, such as a smell sensor, a flavor sensor, a moisture sensor, and a viscometer. The sensor data acquired by the sensor device SE is supplied to the information processing apparatus IP in real time.

The processor PR generates the cooking data CD based on the sensor data acquired from the sensor device SE. The processor PR records, in the cooking data CD, a voice comment made by the recording user during cooking, in association with the sensor data measured at the time of the voice comment. At the time of the voice comment means a start time of voice comment or a period having a predetermined time width centered on the start time of voice comment (around the start time of voice comment).

For example, the voice comment by the recording user includes subjective information sensed by the recording user. Examples of the subjective information are cooking information indicating the state and movement of the cooking object CO and a cooking tool. The processor PR records, in the cooking data CD, the sensor data quantitatively indicating the subjective information, in association with the voice comment by the recording user.

At the timing when the same cooking situation as that at the time of the voice comment by the recording user is detected, the processor PR presents information related to the voice comment to the reproducing user who is reproducing the cooking data CD. The information related to the voice comment is presented, for example, by reproducing the voice comment by the recording user as it is recorded at the time of recording. However, a method of presenting the information is not limited thereto. The voice comment by the recording user may be displayed as text information on the display DP, or video and audio information obtained by processing the voice comment of the recording user may be presented via the display DP and the speaker SP.

When an object of voice comment cannot be identified from the voice comment, the object may be identified based on the line-of-sight information of the recording user. For example, the processor PR identifies the object of voice comment by the recording user based on the line-of-sight of the recording user detected by the line-of-sight sensor SC.

The present system assumes that the recording user makes a voice comment on cooking while cooking. However, there are a case where the recording user switches the cooking step without making a voice comment, and a case where an object of the voice comment is unclear based on the voice comment (text information). For example, there are a case where the heating power is slightly lowered without saying anything, and a case where an instruction word is included in the text information such as "when the temperature here increases" or "when the temperature here becomes 80°C". In these cases, by measuring where the recording user is looking at using the line-of-sight sensor SC, it is possible, based on the line of sight, to estimate five sense information that the recording user has used for making decision.

As the line-of-sight sensor SC, a wearable device such as an AR glass or an eye tracker (manufactured by Tobii Technology K.K.) may be used. However, the method of detecting the line of sight is not limited thereto. For example, a method in which a special contact lens is attached to the eye and its movement is measured (eye-attached tracking), a method in which an object is not brought into direct contact with the eye and measurement is performed using an optical technique (optical tracking), and a method in which potential generated by muscle or the like for moving the eyeball is measured by arranging an electrode around the eye (electric potential measurement) may also be adopted.

The processor PR adjusts the lighting LT in order to control a photographing condition of the camera sensor CM. The lighting LT configures a part of a linkage device LD that controls the cooking environment. The linkage device LD may include other devices such as an air conditioner. The processor PR controls the operation of the linkage device LD based on the sensor data.

The processor PR communicates with an external device, the web server SV, and the like via the network router RT. The processor PR controls the operation of each device in the cooking data record reproduction system CS based on external information, the sensor data, and the user input information acquired through communication.

### [2. Process flow]

Information processing in the cooking data record reproduction system CS is roughly divided into two types. One is a process for recording cooking by the recording user (recording mode). The other is a process for supporting cooking by the reproducing user based on the recorded data (reproduction mode). A process flow in each mode will be described below.

### [2-1. Recording mode]

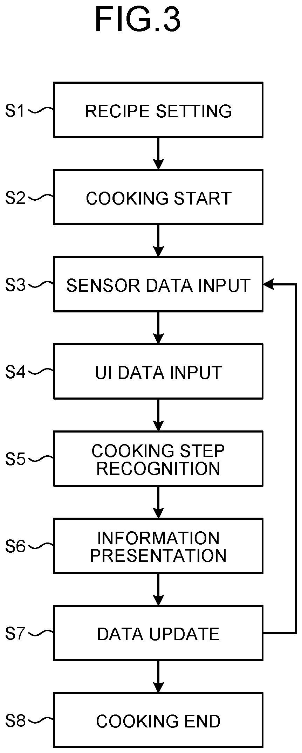

FIG. 3 is a diagram illustrating a process flow in the recording mode.

### <Step S1: Recipe setting>

The recording user sets recipe information serving as cooking conditions via the input UI device IND. For example, the recipe information includes some or all of the following information.
(i) Type and name of dish
(ii) Ingredient to be used, quantity, how to cut, and how to mix
(iii) Cooking tool to be used
(iv) Cooking steps (timing to add and quantity of ingredients, heating power setting, and heating time)
(v) Servings

For example, when the recording user selects a favorite recipe from a menu in an application displayed on the input UI device IND, the recipe information is automatically set. The recording user may also finely set individual information by the application.

### <Step S2: Cooking start>

The processor PR detects the start of cooking based on a trigger event by the operation of the recording user. When the start of cooking is detected, the processor PR performs an initialization process. The initialization process is associated with the recipe information and registered in the web server SV. In the subsequent flow, sensor data input (Step S3) to data recording (Step S7) are a process loop repeatedly executed in real time. Depending on a specific processing system, an execution timing of processes, a parallelization method, and the like are different.

### <Step S3: Sensor data input>

The processor PR receives the sensor data from the sensor device SE that detects the cooking state. In general, a frame rate of each sensor is different and not necessarily synchronized. All the received data is held with a time stamp based on a clock device managed by the processor PR. Although a specific usage of the clock device is not limited, time stamps of all pieces of the sensor data are time-managed so as to be comparable with each other.

### <Step S4: UI data input>

The recording user detects the cooking timing and the like by five senses. The recording user explains aloud sensory cooking information detected by the five senses. The processor PR receives a voice comment by the recording user as the user input information via the microphone MC.

### <Step S5: Cooking step recognition>

The processor PR recognizes the current cooking step based on the recipe information and the input data (sensor data and user input information) so far. In other words, the processor PR identifies which step of the cooking process is being executed. Real-time execution of this process is optional in the recording mode. Recorded cooking data CD may also be analyzed and processed offline after the cooking ends.

### <Step S6: Information presentation>

The processor PR generates the support information based on the recipe information and the sensor data. The processor PR presents the support information generated to the recording user via the output device OTD.

### <Step S7: Data recording>

The processor PR records all pieces of data required in the reproduction mode in an appropriate format and generates the cooking data CD. A non-volatile storage ST is assumed as a normal recording destination, but the recording destination is not limited thereto. As the recording destination, any storage device accessible by the processor PR can be used. The recording is not necessarily performed, and data may be streamed and transmitted to an external device.

### <Step S8: Cooking end>

The processor PR detects an end of cooking based on a trigger event by the operation of the recording user. When the end of cooking is detected, the processor PR performs an end process. The end process is registered, in the web server SV, in association with the recipe information.

### [2-2. Reproduction mode]

Hereinafter, each process in the reproduction mode will be described focusing on a difference in operation with respect to the recording mode. Since Steps S2, S3, S4, S7, and S8 are the same as those in the recording mode, the description thereof will be omitted.

### <Step S1: Recipe setting>

The reproducing user designates recorded cooking data CD (reference data RF) serving as reference via the input UI device IND. The reference data RF indicates a cooking process to be reproduced by the reproducing user. The reproducing user performs cooking according to the procedure indicated in the reference data RF. As a result, a dish of the recording user is reproduced.

The processor PR reads the specified reference data RF. The processor PR sets the recipe information included in the reference data RF as cooking conditions. The reproducing user may directly start cooking under the same conditions or change the conditions via the input UI device IND similarly to the recording mode.

### <Step S5: Cooking step recognition>

The processor PR recognizes the current cooking step based on the recipe information and the input data (sensor data and user input information) so far. In the reproduction mode, cooking is performed according to the cooking procedure recorded in the reference data RF, and thus it is important to identify which step of the cooking process is being executed.

### <Step S6: Information presentation>

The processor PR generates the support information based on the recipe information, the reference data RF, and the sensor data. The processor PR presents generated support information to the reproducing user via the output device OTD.

### [3. Example of subjective information included in voice comment by recording user]

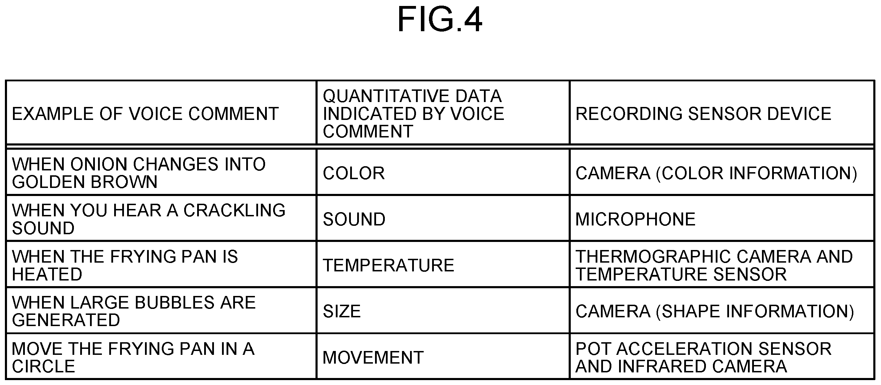

FIG. 4 is a diagram illustrating an example of the subjective information included in the voice comment by the recording user.

In the recording mode, the recording user performs cooking while explaining aloud the cooking process. The processor PR records the voice comment by the recording user in association with quantitative data (sensor data of temperature, time, weight, color, etc.) indicating the cooking situation at the time of the voice comment. In the reproduction mode, the processor PR determines whether or not the same cooking situation as that at the time of the voice comment by the recording user has occurred based on the quantitative data detected by the sensor device SE. When the cooking situation at the time of the voice comment occurs, the processor PR presents the recorded voice comment to the reproducing user via the output device OTD.

For example, when the recording user says during recording, "Color of onion has changed into golden brown, so stop heating" and stops heating, the processor PR records the "color of onion" (RGB data) by the camera sensor CM at the time of the voice comment. Then, at the time of reproduction, the processor PR performs real-time sensing of the color of onion being cooked with the camera sensor CM and notifies the reproducing user of "Color of onion has changed into golden brown, so stop heating" by audio or video output at a time point at which the color of onion coincides with the "color of onion" at the time of recording the voice comment. As a result, the recording user can record his/her cooking with higher accuracy, and the reproducing user can intuitively cook according to voice instruction by the recording user.

In the above example, the information indicating that the color of onion has changed into golden brown is the subjective information sensed by the recording user. The RGB data representing golden brown is the sensor data (quantitative data) quantitatively indicating the subjective information.

Examples of the cooking information to be recorded are not limited to those described above. Examples of the subjective information include "When you hear a crackling sound", "When the frying pan is heated", "When large bubbles are generated", and "Move the frying pan in a circle". These pieces of information are each associated with quantitative data regarding sound, temperature, size, and movement. For example, the sound is detected by the microphone MC. The temperature is detected by a thermographic camera or a temperature sensor. The size is detected by the camera sensor CM. The movement is detected by an acceleration sensor or an infrared camera.

The voice comments in FIG. 4 are obtained by recognizing voice of the recording user input to the microphone MC and converting the voice into text information. The processor PR recognizes the subjective information regarding the cooking state such as color, sound, temperature, and size from the text information obtained by conversion. The processor PR records, in the cooking data CD, the sensor data quantitatively indicating information recognized at the time of the voice comment, in association with the voice comment. As a result, the five sense information of the recording user is recorded at highly accurate timing.

The measurement of the quantitative data is performed, for example, at a timing when the recording user makes a voice comment. However, the quantitative data may be constantly measured and recorded, and desired data may be extracted from the recorded time-series data and recorded in the cooking data CD. This is because the voice comment may include information related to the time width, such as "after frying over high heat for two minutes". For example, the temperature sensor on a pan bottom can be constantly measured from the start to the end of cooking, and when there is a voice comment regarding a temperature, data matching the time when the voice comment is made or the content of the voice comment can be extracted and recorded in the cooking data CD together with the voice comment.

The quantitative data of which sensor is assigned to the subjective information spoken by the recording user can be manually set at the time of designing the system. However, the assignment may also be automatically performed using a method such as machine learning. For example, when a voice comment is made on color, it is possible to perform setting to always record both the color information by the camera sensor CM and the frying pan temperature in any recipe. The reason why the frying pan temperature is recorded is that the color changes depending on the frying pan temperature.

Not only one piece of quantitative data but also a plurality of pieces of quantitative data may also be associated with the voice comment by the recording user. This is because there is a possibility that the cooking situation indicated by the voice comment is defined by a plurality of parameters. For example, when the recording user makes a voice comment related to sound, both the sound by the microphone MC and the temperature of the cooking object CO can be recorded as the quantitative data. The temperature is recorded because the sound is more likely to be caused by a high temperature. When the recording user makes a voice comment related to the temperature, it is possible to perform setting to record both the thermographic camera and the pan bottom temperature sensor as the quantitative data.

Note that, when the quantitative data representing the voice comment cannot be directly measured by the sensor included in the system, measurement data of one or more sensors related to the voice comment may be recorded as the quantitative data. For information that is difficult to directly measure, such as smell and taste, sensor data closely related to smell and taste is recorded as the quantitative data. For example, when there is a voice comment regarding smell, setting may be performed to record the heating time, the temperature, and the weight as the quantitative data. As a result, the five sense information that cannot be directly measured by the sensor included in the system can be recorded based on a plurality of pieces of data.

### [4. Learning implicit knowledge]

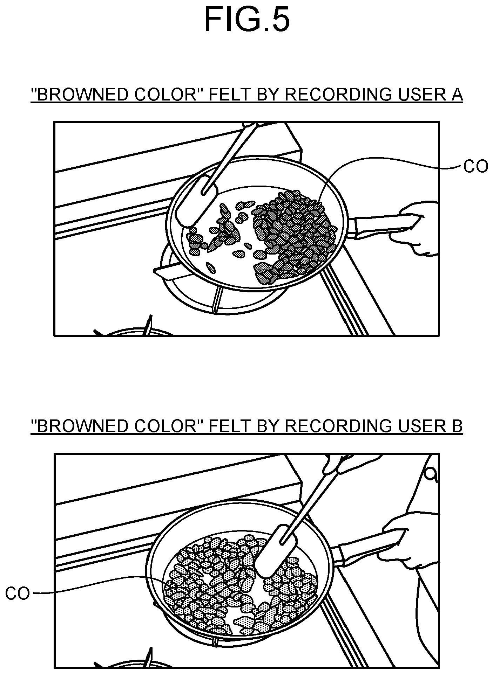

FIG. 5 is a diagram illustrating implicit knowledge of the recording user.

Subjective factors such as color and sound may be sensed slightly different by each recording user. For example, an upper part in FIG. 5 illustrates a cooking state of onion that a recording user A feels "browned color". A lower part in FIG. 5 illustrates a cooking state of onion that a recording user B feels "browned color". The color that the recording user A feels as the "browned color" is darker than the color that the recording user B feels as the "browned color". The recording user B feels "burned" when the cooking object CO is fried to brown color, whereas the recording user A does not feel "burned" until the cooking object CO is fried to considerably black color.

Each of the recording users A and B has knowledge (implicit knowledge) recognized as unspoken understanding. In the example in FIG. 5, each recording user has an unspoken understanding of "browned color". However, implicit knowledge of one recording user is not implicit knowledge of other recording users. Therefore, the processor PR associates objective measurement data (quantitative data) with the subjective information representing the implicit knowledge. However, even when this association is not performed, it is possible to directly estimate the quantitative data from the voice comment of the recording user by learning the implicit knowledge of each recording user.

For example, a relationship between the implicit knowledge and the quantitative data is accumulated as supervised data, and an analysis model is caused to perform machine learning. The processor PR estimates the sensor data indicated by the subjective information using the analysis model that has learned senses of the recording user. The processor PR records, in the cooking data CD, estimated sensor data in association with the voice comment by the recording user. As a result, the implicit knowledge can be quantitatively expressed.

In the example in FIG. 5, onion color information in camera image at the time that the recording user A says, "When onion turns to browned color, stop heating" is accumulated, and the analysis model learns accumulated color information. This makes it possible to distinguish the color of onion represented by an expression "browned color" of the recording user A. Similarly, the implicit knowledge of the recording user B can also be learned. In this way, it is possible to generate a quantitative recipe only from the voice comment (text information) of the recording user by expressing senses of each recording user by quantitative data.

In the above example, one piece of quantitative data, which is color information of a camera image, is associated with the implicit knowledge of "browned color". However, the number of pieces of the quantitative data associated with the implicit knowledge is not limited to one. Smell, taste, and the like are complex senses, and it may be possible to explain the smell or taste felt by the recording user by learning a plurality of pieces of quantitative data as supervised data. Therefore, for learning, the implicit knowledge representing complex senses may be associated with a plurality of pieces of quantitative data. As a result, even when the five sense information cannot be directly measured by individual sensors, determination of the recording user can be estimated by machine learning.

### [5. Cooking step recognition]

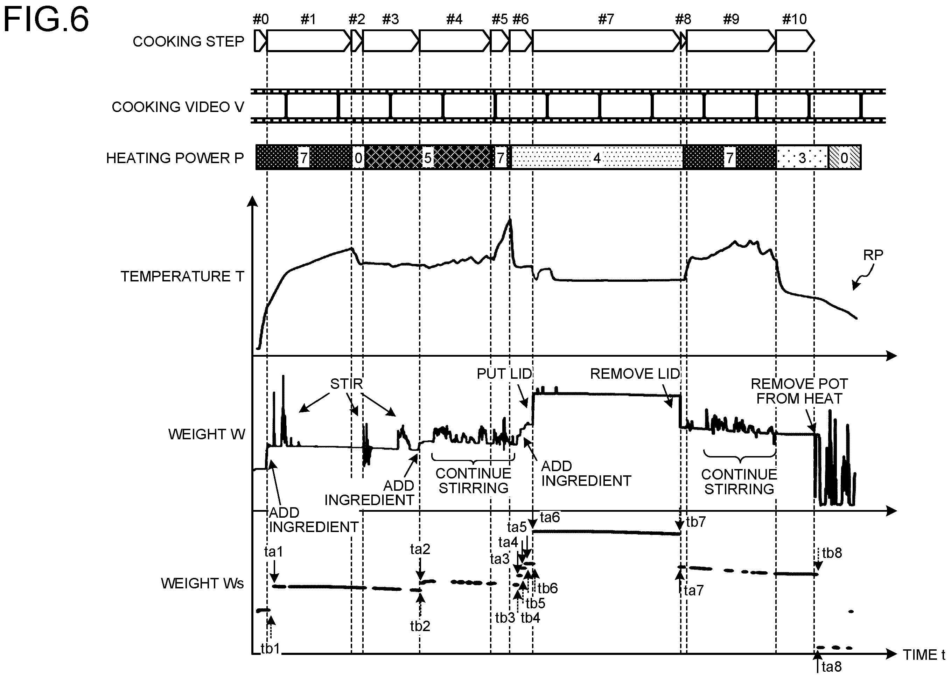

FIG. 6 is a diagram illustrating cooking step recognition.

The cooking step recognition is a process of recognizing start/end timing of each step constituting the cooking process for each sample in order to perform data comparison on a time axis between different samples. Here, the "different samples" are time-series data groups recorded in different cooking occasions based on the same recipe, and representatively denote the reference data RF and the reproduction data RP.

FIG. 6 illustrates the entire cooking process from the start to end of cooking. A horizontal axis in FIG. 6 indicates time from the start of cooking. As the time-series data, for example, a cooking video V obtained by photographing inside the pot PT with the camera sensor CM, heating power of the IH heater HT, a temperature T measured with the temperature sensor TS, and a weight W measured with the weight sensor WS are recorded in time series. Weight Ws is data generated by removing disturbance noise caused by adding ingredients, stirring, or the like from the weight W.

The heating power of the IH heater HT is represented by, for example, from levels 1 to 7. A set value of heating power increases as the level increases. For example, "level 7", "level 5", and "level 3" represent 200°C, 160°C, and 120°C, respectively. "OFF" represents a state of stopping heating.

In FIG. 6, "#0" to "#10" indicate different cooking steps, respectively. A boundary of the cooking steps is characterized by, for example, a timing at which the following operations are performed. These operations do not always determine the boundary of the cooking steps, but are often effective division criteria.
· Changing heating power
· Adding ingredients into the pot PT
· Taking out ingredients from the pot PT (including removal of impurities)
· Start/end of operations such as stirring of ingredients and pot shaking
· Placing/removing the pot PT, pot lid, and the like

In the present system, it is assumed that the recording user manually inputs the cooking steps by offline processing after cooking is finished. For example, the recording user performs five cooking steps such as "Cut, heat, add ingredient A, stir, add ingredient B, stop heating" at the time of recording. After completion of cooking, the cooking process is manually divided such that a step of "cutting" is performed from this time to this time and a step of "heating" is performed from this time to this time. However, the user feels it bothersome to manually set the cooking steps.

Therefore, the recording user uses the microphone MC to make a voice comment, while cooking, to provide notification of details of a cooking step and the start/end of the cooking step. Accordingly, the cooking steps can be automatically recorded. For example, when cooking is performed while making voice comments, "Start stirring" and "Stop stirring now" to inform the start and the end, a period from time making the voice comment related to start to time making the voice comment related to end can be recorded as one cooking step. As a result, bothersome manual setting of cooking steps can be reduced, in addition to recording of highly accurate switching timings.

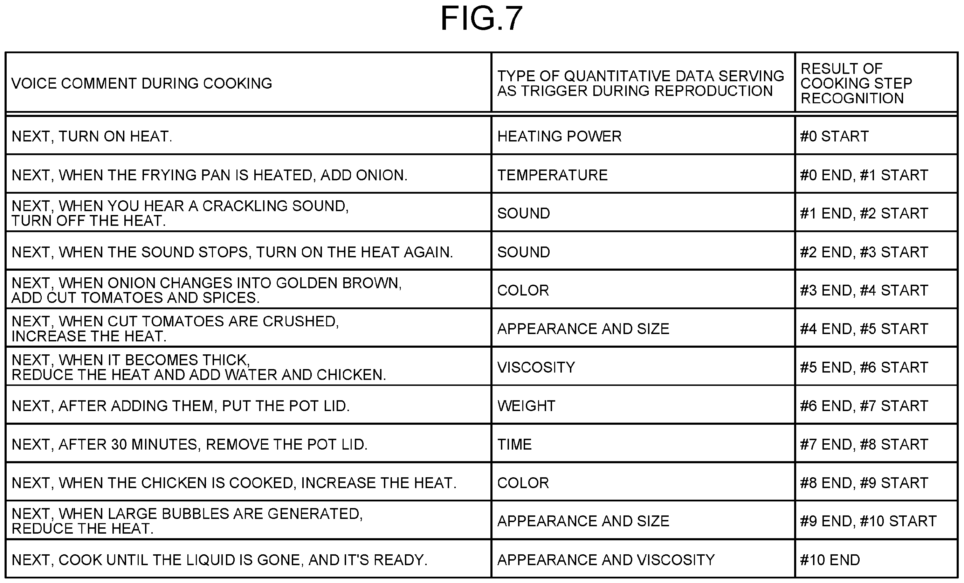

FIG. 7 is a diagram illustrating examples of voice comments made related to the start/end of each cooking step during recording.

The processor PR detects the switching timings (start and end timings) of the cooking step based on the voice comment made by the recording user to provide notification of switching of the cooking step. The processor PR records, in the cooking data CD, information on detected switching timing of the cooking step, in association with the sensor data measured at the time of notification. When the recording user makes the voice comment related to the start and end of the cooking step, a predetermined keyword is used. The processor PR detects a timing at which the recording user says the predetermined keyword as a timing of switching the cooking step. FIG. 7 gives the examples of using "Next" as a keyword to separate the cooking steps of chicken curry.

For example, when the recording user says "Next, turn on heat", notification of a start of a cooking step #0 is provided. The processor PR records, in the cooking data CD, heating power setting data at the time of making the voice comment, in association with the voice comment, "Next, turn on heat" and information indicating a start timing of the cooking step #0.

When the recording user says "Next, when the frying pan is heated, add onion", notification of a start of a cooking step #1 (end of the cooking step #0) is provided. The processor PR records, in the cooking data CD, measurement data of the temperature sensor TS at the time of the voice comment, in association with the voice comment, "Next, when the frying pan is heated, add onion" and information indicating a start timing of the cooking step #1 (end timing of the cooking step #0).

When the recording user says "Next, when you hear a crackling sound, turn off the heat", notification of a start of a cooking step #2 (end of the cooking step #1) is provided. The processor PR records, in the cooking data CD, measurement data of the microphone MC at the time of the voice comment, in association with the voice comment, "Next, when you hear a crackling sound, turn off the heat" and information indicating a start timing of a cooking step #2 (end timing of the cooking step #1).

When the recording user says "Next, when the sound stops, turn on the heat again", notification of a start of a cooking step #3 (end of the cooking step #2) is provided. The processor PR records, in the cooking data CD, measurement data of the microphone MC at the time of the voice comment, in association with the voice comment, "Next, when the sound stops, turn on the heat again" and information indicating a start timing of the cooking step #3 (end timing of the cooking step #2).

When the recording user says "Next, when onion changes into golden brown, add cut tomatoes and spices", notification of a start of a cooking step #4 (end of the cooking step #3) is provided. The processor PR records, in the cooking data CD, color data of a camera image at the time of the voice comment, in association with the voice comment, "Next, when onion changes into golden brown, add cut tomatoes and spices" and information indicating a start timing of the cooking step #4 (end timing of the cooking step #3) .

When the recording user says "Next, when cut tomatoes are crushed, increase the heat", notification of a start of a cooking step #5 (end of the cooking step #4) is provided. The processor PR records, in the cooking data CD, shape data of a camera image at the time of the voice comment, in association with the voice comment, "Next, when cut tomatoes are crushed, increase the heat" and information indicating a start timing of the cooking step #5 (end timing of the cooking step #4).

When the recording user says "Next, when it becomes thick, reduce the heat and add water and chicken", notification of a start of a cooking step #6 (end of the cooking step #5) is provided. The processor PR records, in the cooking data CD, measurement data of a viscosity sensor at the time of the voice comment, in association with the voice comment, "Next, when it becomes thick, reduce the heat and add water and chicken" and information indicating a start timing of the cooking step #6 (end timing of the cooking step #5).

When the recording user says "Next, after adding them, put the pot lid", notification of a start of a cooking step #7 (end of the cooking step #6) is provided. The processor PR records, in the cooking data CD, measurement data of the weight sensor WS at the time of the voice comment, in association with the voice comment, "Next, after adding them, put the pot lid" and information indicating a start timing of the cooking step #7 (end timing of the cooking step #6).

When the recording user says "Next, after 30 minutes, remove the pot lid", notification of a start of a cooking step #8 (end of the cooking step #7) is provided. The processor PR records, in the cooking data CD, measurement data of a timer at the time of the voice comment, in association with the voice comment, "Next, after 30 minutes, remove the pot lid" and information indicating a start timing of a cooking step #8 (end timing of the cooking step #7).

When the recording user says "Next, when the chicken is cooked, increase the heat", notification of a start of a cooking step #9 (end of the cooking step #8) is provided. The processor PR records, in the cooking data CD, color data of a camera image at the time of the voice comment, in association with the voice comment, "Next, when the chicken is cooked, increase the heat" and information indicating a start timing of the cooking step #9 (end timing of the cooking step #8).

When the recording user says "Next, when large bubbles are generated, reduce the heat", notification of a start of a cooking step #10 (end of the cooking step #9) is provided. The processor PR records, in the cooking data CD, shape data of a camera image at the time of the voice comment, in association with the voice comment, "Next, when large bubbles are generated, reduce the heat" and information indicating a start timing of a cooking step #10 (end timing of the cooking step #9).

When the recording user says "Next, cook until the liquid is gone, and it's ready", notification of an end of cooking step #10 is provided. The processor PR records, in the cooking data CD, shape data of a camera image and measurement data of the viscosity sensor at the time of the voice comment, in association with the voice comment, "Next, cook until the liquid is gone, and it's ready" and information indicating an end timing of the cooking step #10.

In the example in FIG. 7, "Next" is used as the keyword, but the keyword is not limited to "Next". Other words such as "From now" and "Here" can be used as the keyword. A plurality of keywords can also be used without being selectively used in one cooking process. In addition, an announcement of the start/end of each cooking step by the keyword may be substituted by the operation of a physical button or the like. Even when the keyword is not recognized, the voice comment by the recording user is always recorded, and can be manually corrected after the cooking is finished.

The reproducing user reproduces the dish of the recording user using the reference data RF including the information regarding the timing of switching the cooking steps. The processor PR monitors a cooking situation of the reproducing user based on the sensor data. When the cooking situation indicating the switching of the cooking steps is detected, the processor PR presents, to the reproducing user, voice comment information of the recording user at the time of switching the cooking step.

The reproducing user can correct the quantitative data indicating the timing of switching the cooking step during cooking. For example, the reproducing user makes a voice comment such as "I will fry it until it gets more brown" at a timing that the information is presented.

The processor PR corrects the sensor data indicating the timing of switching the cooking step in the reference data RF based on the voice comment related to the correction of the timing of switching the cooking step performed by the reproducing user during reproduction of the reference data RF. The processor PR records corrected quantitative data in the reproduction data RP as sensor data indicating the timing of switching the cooking step. As a result, for example, the reproducing user can arrange cooking according to preference of the reproducing user or a person to which the reproducing user serves the dish, such as "slightly more salt" and "slightly longer heating".

### [6. Hardware configuration example]

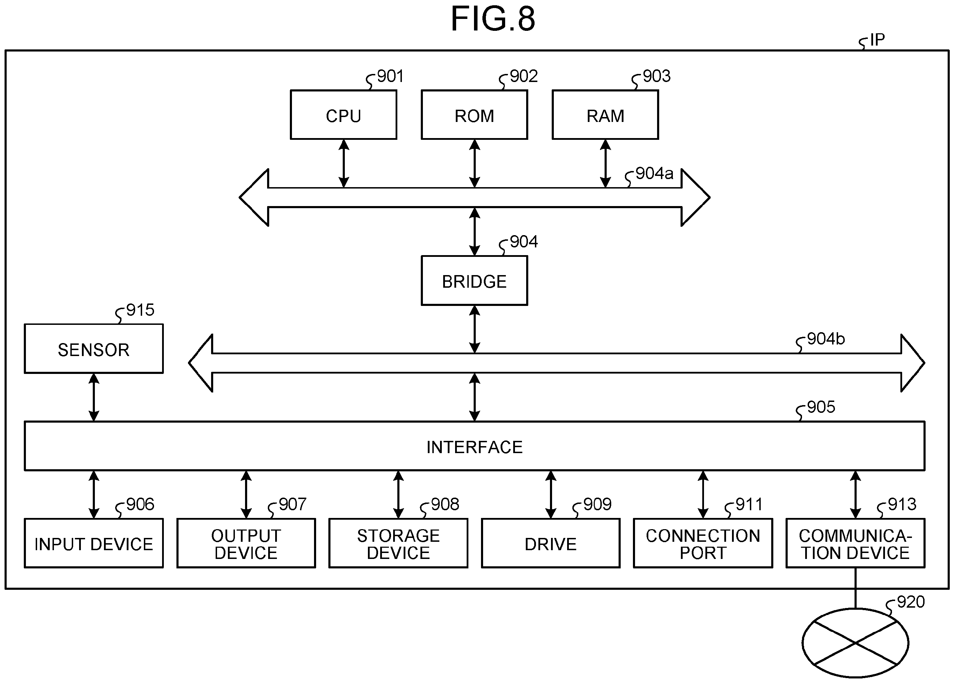

FIG. 8 is a diagram illustrating a hardware configuration example of the information processing apparatus IP.

The information processing apparatus IP includes a central processing unit (CPU) 901, a read only memory (ROM) 902, a random access memory (RAM) 903, and a host bus 904a. In addition, the information processing apparatus IP includes a bridge 904, an external bus 904b, an interface 905, an input device 906, an output device 907, a storage device 908, a drive 909, a connection port 911, a communication device 913, and a sensor 915. The information processing apparatus IP may include a processing circuit such as a DSP or an ASIC instead of or in addition to the CPU 901.

The CPU 901 functions as an arithmetic processing device and a control device, and controls the overall operation of the cooking data record reproduction system CS according to various programs. Furthermore, the CPU 901 may be a microprocessor. The ROM 902 stores programs, operation parameters, and the like used by the CPU 901. The RAM 903 temporarily stores programs used in execution of the CPU 901, parameters that appropriately change in the execution, and the like. The CPU 901 functions as, for example, the processor PR.

The CPU 901, the ROM 902, and the RAM 903 are mutually connected by the host bus 904a including a CPU bus and the like. The host bus 904a is connected to the external bus 904b such as a peripheral component interconnect/interface (PCI) bus via the bridge 904. Note that the host bus 904a, the bridge 904, and the external bus 904b do not necessarily need to be configured separately, and these functions may be mounted on one bus.

The input device 906 is realized by, for example, a device to which information is input by the user, such as a mouse, a keyboard, a touch panel, a button, a microphone, a switch, and a lever. Furthermore, the input device 906 may be, for example, a remote control device using infrared rays or other radio waves, or may be an external connection device such as a mobile phone or a PDA corresponding to the operation of the information processing apparatus IP. Furthermore, the input device 906 may include, for example, an input control circuit that generates an input signal based on information input by the user using aforementioned input means and outputs the input signal to the CPU 901. By operating the input device 906, the user of the information processing apparatus IP can input various types of data to the information processing apparatus IP or instruct the information processing apparatus IP to perform a processing operation. The input device 906 may form, for example, the input UI device IND.

The output device 907 is formed of a device capable of visually or aurally notifying the user of acquired information. Examples of the output device include a display device such as a CRT display device, a liquid crystal display device, a plasma display device, an EL display device, and a lamp, an audio output device such as a speaker and a headphone, and a printer device. The output device 907 outputs, for example, results obtained by various processes performed by the information processing apparatus IP. Specifically, the display device visually displays results obtained by various processes performed by the information processing apparatus IP in various formats such as text, images, tables, and graphs. On the other hand, the audio output device converts an audio signal including reproduced audio data, acoustic data, or the like into an analog signal and aurally outputs the analog signal. The output device 907 may form, for example, the output device OTD.

The storage device 908 is a data storage device formed as an example of a storage unit of the information processing apparatus IP. The storage device 908 is realized by, for example, a magnetic storage device such as an HDD, a semiconductor storage device, an optical storage device, and a magneto-optical storage device. The storage device 908 may include a storage medium, a recording device that records data in the storage medium, a reading device that reads data from the storage medium, and a deletion device that deletes data recorded in the storage medium. The storage device 908 stores programs executed by the CPU 901, various types of data, and various types of data externally acquired. The storage device 908 may form, for example, the storage ST.

The drive 909 is a reader/writer for a storage medium, and is built in or externally attached to the information processing apparatus IP. The drive 909 reads information recorded in a removable storage medium such as a mounted magnetic disk, optical disk, magneto-optical disk, or semiconductor memory, and outputs the information to the RAM 903. Furthermore, the drive 909 can also write information to the removable storage medium.

The connection port 911 is an interface connected to an external device, and is a connection port to an external device capable of transmitting data by, for example, a universal serial bus (USB).

The communication device 913 is, for example, a communication interface formed by a communication device or the like for connecting to the network 920. The communication device 913 is, for example, a communication card for wired or wireless local area network (LAN), long term evolution (LTE), Bluetooth (registered trademark), or wireless USB (WUSB). Furthermore, the communication device 913 may be a router for optical communication, a router for asymmetric digital subscriber line (ADSL), or a modem for various communications. The communication device 913 can transmit and receive signals and the like according to a predetermined protocol such as TCP/IP with the Internet or another communication device (server SV, etc.).

The sensor 915 is, for example, various sensors such as a temperature sensor, a weight sensor (force sensor), a camera sensor, a distance measuring sensor, a sound sensor, an acceleration sensor, a gyro sensor, and a geomagnetic sensor. The sensor 915 acquires information regarding the cooking state of the cooking object CO, such as the heating temperature, the heating time, and the weight of the cooking object CO, and information regarding a surrounding environment of the information processing apparatus IP, such as brightness and noise around the information processing apparatus IP. The sensor 915 may form, for example, the sensor device SE.

Note that the network 920 is a wired or wireless transmission path of information transmitted from a device connected to the network 920. For example, the network 920 may include a public network such as the Internet, a telephone network, and a satellite communication network, various local area networks (LANs) including Ethernet (registered trademark) and a wide area network (WAN). Furthermore, the network 920 may include a dedicated line network such as an Internet protocol-virtual private network (IP-VPN).

### [7. Effects]

The information processing apparatus IP includes the processor PR. The processor PR records, in the cooking data CD, a voice comment made by the recording user during cooking, in association with the sensor data measured at the time of the voice comment. In the information processing method of the present disclosure, processing of the information processing apparatus IP is executed by a computer. The program of the present disclosure causes the computer to implement the processing of the information processing apparatus IP.

According to this configuration, a recorded dish can be intuitively reproduced based on voice comments recorded in the cooking data CD.

The processor PR presents information related to the voice comment to the reproducing user reproducing the cooking data CD at a timing when the same cooking situation as that at the time of the voice comment by the recording user is detected.

According to this configuration, the information on voice comment by the recording user is presented at an appropriate timing.

The processor PR identifies an object that is a target of the voice comment by the recording user based on the line-of-sight of the recording user.

According to this configuration, the object to acquire sensor data is appropriately identified.

The processor PR detects the timing of switching the cooking step based on the voice comment by the recording user providing notification of the switching of the cooking step. The processor PR records, in the cooking data CD, information on detected switching timing of the cooking step, in association with the sensor data measured at the time of notification.

According to this configuration, the switching timing of the cooking step is appropriately set. In addition, a burden of manually setting the switching timing can be eliminated.

The processor PR detects a timing at which the recording user says the predetermined keyword as a timing of switching the cooking step.

According to this configuration, the cooking steps are appropriately divided based on the keyword.

The processor PR corrects the sensor data indicating the timing of switching the cooking step in the cooking data based on the voice comment related to correction of the timing of switching the cooking step performed by the reproducing user during reproduction of the cooking data CD.

According to this configuration, cooking can be arranged according to preference of the reproducing user.

The voice comment by the recording user includes the subjective information sensed by the recording user. The processor PR records, in the cooking data CD, the sensor data quantitatively indicating the subjective information, in association with the voice comment by the recording user.

According to this configuration, the cooking situation sensed by the recording user can be objectively defined according to the sensor data.

The processor PR estimates the sensor data indicated by the subjective information included in the voice comment by the recording user using the analysis model that has learned senses of the recording user. The processor PR records, in the cooking data, the estimated sensor data in association with the voice comment by the recording user.

According to this configuration, a quantitative recipe can be generated only from the voice comment (text information) by the recording user.

Note that the effects described in the present specification are merely examples and not limited, and other effects may be provided.

### [Supplementary note]

The present technology can also have the following configurations.
(1) An information processing apparatus comprising a processor that records, in cooking data, a voice comment made by a recording user during cooking, the voice comment being associated with sensor data measured at a time of making the voice comment.
(2) The information processing apparatus according to (1), wherein
   the processor presents information regarding the voice comment to a reproducing user reproducing the cooking data, the information being presented at a timing of detecting a cooking situation same as at the time of the voice comment by the recording user.
(3) The information processing apparatus according to (2), wherein
   the processor identifies an object that is a target of the voice comment by the recording user based on a line-of-sight of the recording user.
(4) The information processing apparatus according to (2) or (3), wherein
   the processor detects a switching timing of a cooking step based on a voice comment providing notification of a switching of the cooking step by the recording user, and records, in the cooking data, information regarding the switching timing of the cooking step detected, the information being associated with sensor data measured at a time of notification.
(5) The information processing apparatus according to (4), wherein
   the processor detects a timing at which the recording user says a predetermined keyword as the switching timing of the cooking step.
(6) The information processing apparatus according to (4) or (5), wherein
   the processor corrects the sensor data indicating the switching timing of the cooking step in the cooking data based on a voice comment related to correction of the switching timing of the cooking step, the voice comment being made by the reproducing user during reproduction of the cooking data.
(7) The information processing apparatus according to any one of (1) to (6), wherein
   the voice comment includes subjective information sensed by the recording user, and
   the processor records, in the cooking data, the sensor data quantitatively indicating the subjective information, the sensor data being associated with the voice comment.
(8) The information processing apparatus according to any one of (1) to (6), wherein
   the processor estimates the sensor data indicating the subjective information using an analysis model that has learned senses of the recording user, and records the sensor data estimated in the cooking data, the sensor data being associated with the voice comment.
(9) An information processing method executed by a computer, the method comprising recording, in cooking data, a voice comment made by a recording user during cooking, the voice comment being associated with sensor data measured at a time of making the voice comment.
(10) A program causing a computer to implement recording, in cooking data, a voice comment made by a recording user during cooking, the voice comment being associated with sensor data measured at a time of making the voice comment.

### Reference Signs List

- CD: COOKING DATA
- IP: INFORMATION PROCESSING APPARATUS
- PR: PROCESSOR

## Claims

1. An information processing apparatus comprising a processor that records, in cooking data, a voice comment made by a recording user during cooking, the voice comment being associated with sensor data measured at a time of making the voice comment.

2. The information processing apparatus according to claim 1, wherein
the processor presents information regarding the voice comment to a reproducing user reproducing the cooking data, the information being presented at a timing of detecting a cooking situation same as at the time of the voice comment by the recording user.

3. The information processing apparatus according to claim 2, wherein
the processor identifies an object that is a target of the voice comment by the recording user based on a line-of-sight of the recording user.

4. The information processing apparatus according to claim 2, wherein
the processor detects a switching timing of a cooking step based on a voice comment providing notification of a switching of the cooking step by the recording user, and records, in the cooking data, information regarding the switching timing of the cooking step detected, the information being associated with sensor data measured at a time of notification.

5. The information processing apparatus according to claim 4, wherein
the processor detects a timing at which the recording user says a predetermined keyword as the switching timing of the cooking step.

6. The information processing apparatus according to claim 4, wherein
the processor corrects the sensor data indicating the switching timing of the cooking step in the cooking data based on a voice comment related to correction of the switching timing of the cooking step, the voice comment being made by the reproducing user during reproduction of the cooking data.

7. The information processing apparatus according to claim 2, wherein
the voice comment includes subjective information sensed by the recording user, and
the processor records, in the cooking data, the sensor data quantitatively indicating the subjective information, the sensor data being associated with the voice comment.

8. The information processing apparatus according to claim 7, wherein
the processor estimates the sensor data indicating the subjective information using an analysis model that has learned senses of the recording user, and records the sensor data estimated in the cooking data, the sensor data being associated with the voice comment.

9. An information processing method executed by a computer, the method comprising recording, in cooking data, a voice comment made by a recording user during cooking, the voice comment being associated with sensor data measured at a time of making the voice comment.

10. A program causing a computer to implement recording, in cooking data, a voice comment made by a recording user during cooking, the voice comment being associated with sensor data measured at a time of making the voice comment.
